# EUROPÄISCHE PATENTSCHRIFT

(11) **EP 2 737 648 B1**
(45) Veröffentlichungstag und Bekanntmachung des Hinweises auf die Patenterteilung: **12.09.2018**
(21) Anmeldenummer: 12733074.4
(22) Anmeldetag: 02.07.2012
(51) Int. Cl.: H04K 3/00

(54) **VERFAHREN ZUM ÜBERTRAGEN VON INFORMATIONSDATEN**
METHOD FOR TRANSFERRING INFORMATIONAL DATA
PROCÉDÉ DE TRANSMISSION DE DONNÉES D'INFORMATION

(30) Priorität: 28.07.2011 DE 102011079972
(43) Veröffentlichungstag der Anmeldung: 04.06.2014
(73) Patentinhaber: Siemens Convergence Creators GmbH, 1210 Wien (AT)
(72) Erfinder: MEYRATH, Wilhelm, A-3400 Klosterneuburg (AT)
(74) Vertreter: Novagraaf Technologies
(86) Internationale Anmeldenummer: PCT/EP2012/062808
(87) Internationale Veröffentlichungsnummer: WO 2013/013934

(56) Entgegenhaltungen:
- EP-B1- 1 969 875
- WO-A1-2010/032237

## Beschreibung

### Technisches Gebiet

Die vorliegende Erfindung betrifft Verfahren zum Übertragen von Informationsdaten, insbesondere Audio- und/oder Videodaten in Form von so genannten Streams, in einer Personenbeförderungseinrichtung. Die Personenbeförderungseinrichtung umfasst dabei ein Informationssystem mit zugehörigen Ausgabeeinheiten. Zusätzlich ist für eine Kommunikation von in der Personenbeförderungseinrichtung befindlichen mobilen Endgeräten mit Funkkommunikationssystemen außerhalb der Personenbeförderungseinrichtung ein in der Personenbeförderungseinrichtung befindliches Funkkommunikationssystem vorgesehen. Daher wird eine Verbindungsaufnahme zwischen in der Personenbeförderungseinrichtung befindlichen mobilen Endgeräten und Funkkommunikationssystemen außerhalb der Personenförderungseinrichtung durch ein Maskierungssignal, welche von einer Kontrolleinheit erzeugt wird, unterbunden und/oder zum Funkkommunikationssystem innerhalb der Personenbeförderungseinrichtung umgelenkt.

### Stand der Technik

Ein mobiles Endgerät (z.B. Mobiltelefon, Smartphone, etc.), welches in ein Funkkommunikationssystem eingebucht ist, tauscht mittels Funkwellen laufend spezifische Informationen mit dem Funkkommunikationssystem aus. Befinden sich im Sendebereich des mobilen Endgeräts andere elektronische Geräte wie z.B. in einem Flugzeug, so können die Funkwellen in diesen Geräte Störungen verursachen. Daher ist z.B. in Flugzeugen die Nutzung von mobilen Endgeräten wie z.B. Mobiltelefonen untersagt.

Andererseits ist heutzutage eine Nutzung von mobilen Kommunikationseinrichtungen wie z.B. Mobiltelefonen, Laptops, etc. sehr weit verbreitet und es besteht der Bedarf, die privaten Kommunikationseinrichtungen bzw. mobile Endgeräte wie z.B. Mobiltelefone, etc. möglichst einfach und ohne Einschränkung - z.B. während Reisen zu nutzen.

Aus verschiedenen Schriften wie z.B. der EP 1 961 255 oder der EP 1 969 875 B1 sind Verfahren bekannt, durch welche eine Nutzung von mobilen Endgeräten z.B. an Bord eines Flugzeugs unterbunden und/oder auf ein Funkkommunikationssystem innerhalb des Personenbeförderungsmittel umgelenkt wird und damit ohne Sicherheitsrisiko genutzt werden kann. Um eine Kommunikation zwischen einem mobilen Endgerät und einem Funkkommunikationssystem außerhalb des Personenbeförderungsmittel zu verhindern bzw. auf ein Funkkommunikationssystem innerhalb des Personenbeförderungsmittel umzulenken, werden häufig - wie z.B. in der Schrift EP 1 969 875 B1 beschrieben - Störsignale oder Maskierungssignale, welche von eigenen Kontrolleinheiten (z.B. Störsignalgenerator, etc.) generiert werden, verwendet. Dadurch wird vom mobilen Endgeräte z.B. ein Funkkommunikationssystem außerhalb der Personenbeförderungseinrichtung für einen Verbindungsaufbau nicht mehr gefunden und gegebenenfalls die Verbindung mit einem Funkkommunikationssystem innerhalb der Personenbeförderungseinrichtung aufgenommen.

Andererseits besteht in Personenbeförderungseinrichtungen wie z.B. Flugzeugen, Schiffen, Eisenbahnzügen, etc. zunehmend eine Notwendigkeit, Daten beispielsweise für Informationszwecke und/oder zur Unterhaltung zu übertragen. Da heutzutage mobile Endgeräte üblicherweise aus Sicherheitsgründen nur eingeschränkt bzw. gar nicht genutzt werden dürfen, werden die Passagiere z.B. über Informations- und/oder Bordunterhaltungssysteme mit Informationen und/oder Unterhaltungsprogrammen versorgt.

Über ein derartiges Informationssystem werden den Passagieren in Personenbeförderungseinrichtungen wie z.B. Flugzeugen, Eisenbahn, Schiffe, etc. Informationen wie z.B. aktuelle Fahrt-/Flugdaten, Streckeninformationen, Unterhaltung in Form von Audio- und/oder Videodaten, etc. auf zum Informationssystem gehörenden Ausgabeeinheiten angeboten. Derartige Ausgabeeinheiten können beispielsweise Bildschirme mit zugehörigen Bedienungseinrichtungen sein, welche z.B. bei den Sitzen der Passagiere angebracht sind, oder Bildschirme, welche an einer Decke und/oder einer Wand der jeweiligen Personenbeförderungseinrichtung fest angebracht sind und zentral gesteuert werden. Die Ausgabe der Daten bzw. der Informationen kann aber auch auf einer elektronischen Informationsfläche z.B. auf einem so genannten Servicewagen oder Service-Cart erfolgen.

In Flugzeugen werden beispielsweise zum Übertragen von Daten und/oder Informationen zu den Passagieren so genannte In-Flight-Entertainment- oder Bordunterhaltungssysteme eingesetzt. Besonders diese Systeme haben sich in den letzten 25 Jahren stark weiterentwickelt. Anfangs bestanden diese Systeme nur aus Audiosystemen, über welche den Passagieren Audioinformationen und/oder -daten (z.B. Musik, etc.) zur Verfügung gestellt wurden. Ab den 1980iger Jahren wurden die Systeme, um Ausstrahlung von Videoinformationen - üblicherweise VHS-Videobänder, welche über Gruppenbildschirme zu sehen waren, erweitert und seit den frühen 1990iger Jahren gab es die ersten so genannten In-seat-Videosysteme, bei welchen von einem Passagier z.B. ein Video ausgewählt werden konnte, welches dann auf einem zu seinem Sitz gehörenden Bildschirm mit einer zugehörigen Bedienungseinrichtung ausgewählt und ausgegeben werden konnte. Mittlerweile wurden diese Informations- und Entertainmentsystem derart erweitert, dass beispielsweise interaktive Spiele, so genanntes Audio- und Video-On-Demand, etc. sowie z.B. Real-time-Fluginformationen auf Karten (z.B. sogenannte Moving-Map-Systeme, etc.) einem Passagier für Unterhaltungs- und Informationszwecke auf einem Flug zur Verfügung gestellt werden. Aber auch für Züge und/oder Schiffe gibt es z.B. mittlerweile Ansätze und Überlegungen, Bordunterhaltungs- und/oder Informationssysteme anzubieten.

Die Bordunterhaltungssysteme in Flugzeugen bestehen üblicherweise aus einer zentralen Verteilungseinheit, in welcher die Audio- und/oder Videodaten zentral abgelegt sind, und von welcher die Daten dann an eine Vielzahl von Ausgabeeinheiten (z.B. Bildschirme - beispielsweise in der Flugzeugkabine oder bei jedem Passagiersitz) übertragen werden. Üblichweise erfordert ein derartiges Bordunterhaltungssystem eine aufwendige und komplexe Verkabelung, damit - vor allem bei so genannten In-seat-Unterhaltungssystemen (d.h. jeder Passagiersitz weist eine über eine entsprechende Bedienungseinrichtung ansteuerbare Ausgabeeinheit auf, wobei Anwendungen wie z.B. so genanntes Video-on-Demand, Audio-on-Demand, etc. genutzt werden können) - eine Übertragung der Daten (z.B. Videostreams, Audiostreams, etc.) in entsprechender Qualität und Geschwindigkeit ermöglicht wird.

Diese Verkabelung weist allerdings den Nachteil auf, dass sie bei einer entsprechenden Verkabelung von jedem Passagiersitz relativ aufwendig und komplex ist. Außerdem kann eine derartige Verkabelung z.B. bei einem Großraumflugzeug ein beträchtliches Gewicht aufweisen, wodurch das Gewicht des Flugzeugs und damit die Flugkosten beträchtlich steigen können.

Alternativ können daher für die Übertragung der Daten eigene proprietäre oder auch standardisierte Funksysteme wie z.B. auf Basis von so genanntem Wi-Fi oder Wireless LAN verwendet werden. Allerdings werden diese Systeme zurzeit hauptsächlich z.B. für eine Internetnutzung an Bord getestet und sie weisen außerdem den Nachteil auf, dass zusätzlich zu bereits vorhandenen Systemen (z.B. zentrale Verteilungseinheit des Bordunterhaltungssystems, On-Bord-Funkkommunikationssystem, etc.) eine weiteres Kommunikationssystem mit Hard- und Software installiert werden muss, um diesen Übertragungsweg für die Daten zur Verfügung zu stellen. Auch erfordern - insbesondere in einem Flugzeug - zusätzliche Funksysteme neue funktechnische Genehmigungen und/oder Zulassungen, da sich gegebenenfalls Emissionsdaten (z.B. Ausgangsleistung, Frequenzbänder, Antenneninstallationen, etc.) ändern.

### Darstellung der Erfindung

Der Erfindung liegt daher die Aufgabe zugrunde, ein Verfahren zum Übertragen von Informationsdaten in einer Personenförderungseinrichtung anzugeben, durch welches auf einfache Weise unter Nutzung vorhandener Ressourcen und Systeme Informationsdaten von einem Informationssystem zur Verfügung gestellt werden.

Die Lösung dieser Aufgabe erfolgt durch ein Verfahren nach Anspruch 1, wobei ein Maskierungssignal von einer Kontrolleinheit, welche innerhalb einer Personenbeförderungseinrichtung, insbesondere Flugzeug, Eisenbahnzug, Schiff, etc. angebracht ist, derart kodiert und moduliert wird, dass Informationsdaten - insbesondere Datenströme für Information und/oder Unterhaltung (z.B. Video-Streams, AudioStreams, etc.) - mit Hilfe des Maskierungssignals vom Informationssystem zu den zum Informationssystem gehörenden Ausgabeeinheiten übertragen und dann von diesen Ausgabeeinheiten ausgegeben bzw. angezeigt werden.

Der Hauptaspekt der Erfindung besteht darin, dass durch das erfindungsgemäße Verfahren bereits in einer Personenbeförderungseinrichtung vorhandene Ressourcen und/oder Systeme (z.B. Funkkommunikationssystem, Maskierungssignal) genutzt werden. Eine aufwendige und komplexe Einrichtung von zusätzlichen Übertragungswegen wie z.B. zusätzliche Verkabelung, zusätzliches Übertragungssystem, etc. kann auf diese Weise entfallen. Es werden auf einfache Weise bereits vorhandene Systeme wie z.B. das Funkkommunikationssystem innerhalb der Personenbeförderungseinrichtung und/oder vorhandene Ressourcen wie z.B. ein Spektrum des Maskierungssignals für die Übertragung der Informationsdaten - insbesondere für große Datenmengen (z.B. Audio- und/oder Videodaten im Form von so genannten Streams oder Datenströmen) - genutzt.

Das Maskierungssignal bzw. das Spektrum des Maskierungssignals wird damit zusätzlich zu seiner Funktion als Störsignal zum Unterbinden eines Verbindungsaufbaus und/oder einer Kommunikation mit Funkkommunikationssystemen außerhalb der Personenbeförderungseinrichtung auch als Übertragungsmedium genutzt. Das Spektrum des Maskierungssignals, welches anstatt als stochastisches Störsignal idealer Weise als breitbandiges Signal mit rauschähnlichem Charakter ausgestaltet ist, wird damit auf einfache Weise zu Übertragung der Informationsdaten verfügbar gemacht. Dadurch wird einerseits mit geringem Hardwareaufwand ein breitbandiges Übertragungsmedium für die Informationsdaten erschlossen. Andererseits sind z.B. auch die funktechnischen Änderungen relativ gering, da im Wesentlichen nur die mittels des Maskierungssignals übertragenen Dateninhalte, aber nicht die Emissionsdaten (Ausgangsleistung, Frequenzbänder, Antenneninstallation, etc.) geändert werden müssen.

Bei einer bevorzugten Weiterbildung des erfindungsgemäßen Verfahrens werden die Informationsdaten vom Informationssystem über eine Schnittstelle zur Kontrolleinheit übertragen werden. Von der Kontrolleinheit wird dann das Maskierungssignal generiert, welches dann für den Transport der Informationsdaten zu den Ausgabeeinheiten genutzt wird. Die Informationsdaten werden über die Schnittstelle auf einfache Weise vom Informationssystem an die Kontrolleinheit, von welcher auch das Maskierungssignal generiert wird, übertragen und können dann von der Kontrolleinheit durch entsprechende Kodierung und Modulation des Maskierungssignals für den Transport als Nutzsignal über das Maskierungssignal zu den Ausgabeeinheiten eingebracht werden.

Es empfiehlt sich, wenn die Ausgabeeinheiten des Informationssystems zum Empfangen und Anzeigen der Informationsdaten mit entsprechenden Empfangseinheiten ausgerüstet werden. Durch ein Ausrüsten der Ausgabeeinheiten des Informationssystems mit entsprechenden Empfangseinheiten kann auf einfache Weise das Maskierungssignal mit den Informationsdaten empfangen werden. Von der Ausgabeeinheit können dann die Informationsdaten beispielsweise entsprechend dekodiert bzw. umgewandelt und ausgegeben werden.

Es ist vorteilhaft, wenn als Maskierungssignal ein breitbandiges Signal mit rauschähnlichem Charakter genutzt wird. Üblicherweise wird z.B. in Flugzeugen ein stochastisches Signal als Stör- bzw. Maskierungssignal eingesetzt, um einen Verbindungsaufbau zwischen im Flugzeug befindlichen mobilen Endgeräten und Funkkommunikationssystemen außerhalb des Flugzeugs zu unterbinden oder zu einem im Flugzeug befindlichen Funkkommunikationssystem umzulenken. Ein derartiges Störsignal wird beispielsweise von einem so genannten Noise-Generator erzeugt. Wird für das Maskierungssignal allerdings ein breitbandiges Signal mit rauschähnlichem Charakter gewählt, so kann auf einfache Weise z.B. durch geeignete Kodierung und Modulation das gesamte Band belegt werden. D.h. es wird ein Maskierungssignal erzeugt, von welchem einerseits eine für die Übertragung der Informationsdaten hohe Datenrate zur Verfügung gestellt wird, und bei welchem andererseits auch die Maskierungs- bzw. Störwirkung für einen Verbindungsaufbau mit Funkkommunikationssystemen außerhalb der Personenbeförderungseinrichtung bestehen bleibt.

Ein entsprechend günstiges bzw. geeignetes Modulationsverfahren für das Maskierungssignal stellt dabei insbesondere die so genannte Spread-Spectrum-Modulation oder die so genannte Frequenzspreizung dar. Bei diesem Verfahren aus der Nachrichtentechnik wird ein schmalbandiges Signal - beispielsweise das zu übertragende Informationssignal - in ein Signal mit einer größeren Bandbreite als für die Informationsübertragung nötig umgewandelt und die Sendeenergie und damit die zu übertragende Information auf einen größeren Frequenzbereich verteilt. Im so genannten De-Spreading-Prozess werden damit z.B. Störungen im Band - d.h. beispielsweise Signale von Funkkommunikationssystemen außerhalb der Personenbeförderungseinrichtung - unterdrückt. Eine Spread-Spectrum-Modulation weist insbesondere den Vorteil einer größeren Robustheit gegenüber vor allem schmalbandigen Störungen auf. Damit kann durch einen derartige Kodierung/Modulation des Maskierungssignals sowohl die Funktion als Störsignal als auch die Funktion der Datenübertragung erfüllt werden.

Alternativ kann als Modulationsverfahren für das Maskierungssignals auch das so genannte Orthogonal Frequency-Division Multiplexing (OFDM) oder das orthogonale Frequenzmultiplexverfahren verwendet werden, bei welchem mehrere orthogonale Trägersignale zur digitalen Datenübertragung eingesetzt werden. Die zu übertragenden Informationsdaten mit hoher Datenrate (z.B. Videodaten, Audiodaten, etc.) werden dabei auf mehrere Teildatenströme mit niedriger Datenrate aufgeteilt und für diese Teildatenströme werden dann jeder für sich mit einem herkömmlichen Modulationsverfahren (z.B. Quadraturamplitudenmodulation, etc.) mit geringer Bandbreite moduliert. Anschließend werden die einzelnen Trägersignale addiert. Durch den Einsatz von orthogonalen Trägersignalen können die Trägersignale beim Empfänger zur Demodulation wieder unterschieden werden. Der Vorteil des OFDM besteht darin, dass die Datenübertragung auf die Besonderheiten eines Übertragungskanals sehr einfach angepasst werden kann.

Als geeignete Kodierung des Maskierungssignals wird z.B. so genanntes Channel-Coding oder Kanalkodierung eingesetzt. Als Kanalkodierung wird in der Nachrichtentechnik ein Verfahren bezeichnet, bei welchem digitale Daten bei einer Übertragung über gestörte Kanäle durch Hinzufügen von redundanter Information gegen Übertragungsfehler geschützt werden. Durch die zusätzlich zur Information übertragene redundante Information ist es dann sehr einfach möglich, Übertragungsfehler zu korrigieren.

Es ist vorteilhaft, wenn als Ausgabeeinheiten des Informationssystems fest montierte und/oder bewegliche Ausgabegeräte verwendet werden. Mittels der drahtlosen Übertragung der Informationsdaten über das Maskierungssignal können in der Personenbeförderungseinrichtung idealer Weise fest montierte wie auch bewegliche Ausgabeeinheiten angesprochen werden. Vor allem bewegliche Ausgabeeinheiten wie z.B. Informationsbildschirme auf Servicewägen, etc. bieten die Möglichkeit Informationen, Unterhaltung, etc. möglichst flexibel innerhalb der Personenbeförderungseinrichtung anzubieten.

Bei einer speziellen Ausführungsvariante des erfindungsgemäßen Verfahrens wird ein Teil eines Spektrums des Maskierungssignals zum Übertragen von Informationsdaten des Informationssystems an in der Personenbeförderungseinrichtung befindlichen mobilen Endgeräte, insbesondere für Endgeräte auf Basis des Universial Mobile Telecommunication Systems- oder UMTS-Standard, genutzt wird. Da bei UMTS beispielsweise die so genannte Spread-Spektrum- bzw. Frequenzspreizungstechnologie eingesetzt wird, kann bei geeigneter Modulation des Maskierungssignals - z.B. Spread-Spektrum-Modulation - sehr einfach ein Teil des Spektrums des Maskierungssignals zur direkten Übertragung der Informationsdaten zu einem entsprechenden mobilen Endgeräte genutzt werden. Auf Senderseite kann dann sehr einfach das innerhalb der Personenbeförderungseinrichtung bestehende Funkkommunikationssystem genutzt werden, wobei die zu übertragenden Informationsdaten vom Informationssystem beispielsweise zum Funkkommunikationssystem geleitet werden können.

### Kurzbeschreibung der Zeichnung

Die Erfindung wird nachfolgend in beispielhafter Weise anhand der beigefügten Figuren erläutert. Es zeigen:
- Figur 1: schematisch einen beispielhaften Ablauf des erfindungsgemäßen Verfahrens zum Übertragen von Informationsdaten in einer Personenbeförderungseinrichtung
- Figur 2: einen schematischen und beispielhafte Ablauf des erfindungsgemäßen Verfahrens, wobei ein Teil des Spektrums des Maskierungssignals zur Informationsdatenübertragung an mobile Endgeräte genutzt wird.

### Ausführung der Erfindung

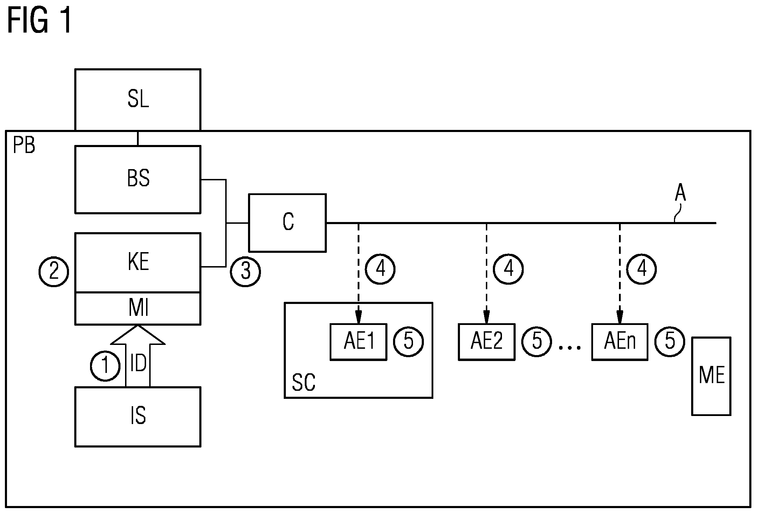

In der Figur 1 ist schematisch und beispielhaft eine Personenbeförderungseinrichtung PB wie z.B. ein Flugzeug, ein Eisenbahnzug, ein Schiff, etc. dargestellt. Diese Personenbeförderungseinrichtung PB umfasst beispielhaft ein Informationssystem IS, zu welchen Ausgabeeinheiten AE1, ..., AEn gehören. Mit dem Informationssystem IS können Passagieren der Personenbeförderungseinrichtung PB Informationsdaten ID wie z.B. Informationen und/oder Unterhaltungsprogramme zur Verfügung gestellt werden.

Dazu werden die Informationsdaten ID, welche insbesondere als Audio- und/oder Videodaten vorliegen und in Form von Datenströmen - so genannten Streams - übertragen werden, vom Informationssystem IS zu den Ausgabeeinheiten AE1, ..., AEn transportiert. Die Ausgabeeinheiten AE1, ..., AEn können beispielsweise fest montiert oder auf einer beweglichen Einheit SC (z.B. Servicewagen) angebracht sein. In Figur 1 ist beispielsweise die Ausgabeeinheit AE1 als Display auf einem Servicewagen SC angebracht und kann damit durch die Personenbeförderungseinrichtung PB bewegt werden. Die Ausgabeeinheiten AE2, ..., AEn sind z.B. als fest montierte Bildschirme ausgeführt, welche z.B. an einer Wand und/oder Decke der Personenbeförderungseinrichtung PB montiert sind und zentral gesteuert werden oder sie sind beispielsweise als Bildschirme mit Bedienteil direkt bei den jeweiligen Passagiersitzen angebracht und es können z.B. mittels des Bedienteils vom jeweiligen Passagier individuell Informationsdaten ID angewählt werden.

Weiterhin umfasst die Personenbeförderungseinrichtung PB ein Funkkommunikationssystem BS, C, A, welches eine so genannte Basisstation BS, eine Kombinationseinheit C und eine Antenneneinheit A umfasst. Die Basisstation BS weist eine Verbindung SL für eine Anbindung des Funkkommunikationssystems BS, C, A innerhalb der Personenbeförderungseinrichtung zu einem Satelliten auf. Über diese Verbindung SL kann dann über einen Satelliten eine Kommunikationsverbindung mit einem Funkkommunikationssystem außerhalb der Personenbeförderungseinrichtung PB aufgebaut werden.

Zusätzlich ist in der Personenbeförderungseinrichtung PB eine Kontrolleinheit KE vorgesehen, von welcher ein Maskierungssignal bzw. Störsignal erzeugt wird. Das Maskierungssignal wird über die Kombinationseinheit C mit den Signalen der Basisstation BS kombiniert und über die Antenneneinheit A in der Personenbeförderungseinrichtung verbreitet. Als Kontrolleinheit KE kann beispielsweise ein so genannter Noise-Generator oder Störsignalgenerator verwendet werden.Durch das Maskierungssignal wird verhindert, dass von innerhalb der Personenbeförderungseinrichtung PB befindlichen mobilen Endgeräten ME wie z.B. Mobiltelefone, etc. ein Verbindungsaufbau zu einem Funkkommunikationssystem außerhalb der Personenbeförderungseinrichtung PB durchgeführt wird.

Da ein derartiger Verbindungsaufbau durch die dazu notwendigen Signale (z.B. von mobilen Endgeräten und/oder dem externen Funkkommunikationssystemen) beispielsweise elektronische Geräte der Personenbeförderungseinrichtung PB stören und damit - insbesondere bei Flugzeugen - zu Sicherheitsrisiken führen können, wird der Verbindungsaufbau durch das Maskierungssignal unterbunden und/oder auf das Funkkommunikationssystem BS, C, A bzw. zur Basisstation BS innerhalb der Personenbeförderungseinrichtung PB umgelenkt. Durch das Maskierungssignal werden von den mobilen Endgeräten ME innerhalb der Personenbeförderungseinrichtung PB die externen Funkkommunikationssysteme außerhalb der Personenbeförderungseinrichtung PB nicht mehr gefunden und gegebenenfalls die mobilen Endgeräte ME in das innerhalb der Personenbeförderungseinrichtung PB befindliche Funkkommunikationssystem BS, C, A eingebucht.

Die Antenneneinheit A kann z.B. als so genannte Leaky Line ausgeführt sein, bei welcher eine Variante eines Koaxialkabels - ein so genanntes Schlitzkabel - als langgestreckte Antenne eingesetzt wird. Dies hat den Vorteil, dass über die gesamte Länge des Kabels bzw. der Antenneneinheit kontrolliert Hochfrequenz-Leistung abgegeben und aufgenommen werden kann und die Signale können möglichst nahe an die Endgeräte herangebracht werden. Daher kann eine Leistung der ausgesendeten Signale - wie z.B. des Maskierungssignals sowie die Signale der Basisstation BS - gering gehalten werden, so dass beispielsweise elektronische Geräte der Personenbeförderungseinrichtung PB nicht gestört werden.

Weiterhin weist die Kontrolleinheit KE eine Schnittstelle MI, ein so genanntes Media Interface auf. Über die Schnittstelle MI werden in einem ersten Verfahrensschritt 1 Informationsdaten ID vom Informationssystem IS an die Kontrolleinheit KE weitergeleitet. In einem zweiten Verfahrensschritt 2 wird von der Kontrolleinheit KE dann ein Maskierungssignal erzeugt sowie entsprechend kodiert und moduliert, sodass die Informationsdaten ID dann in einem dritten Verfahrensschritt 3 über die Kombinationseinheit C und die Antenneneinheit A des in der Personenbeförderungseinrichtung PB befindlichen Funkkommunikationssystems BS, C, A weitergeleitet werden können.

Für einen derartigen Transport der Informationsdaten ID wird idealer Weise ein breitbandiges Signal mit rauschähnlichem Charakter als Maskierungssignal verwendet. Dadurch wird sichergestellt, dass vom Maskierungssignal einerseits eine Funktion als Störsignal für einen Verbindungsaufbau zwischen mobilen Endgeräten ME mit Funkkommunikationssystemen außerhalb der Personenbeförderungseinrichtung erfüllt und andererseits eine hohe Datenrate für den Transport eines Nutzsignal - d.h. die Informationsdaten ID - zur Verfügung gestellt wird. Als geeignete Kodierung des Maskierungssignals wird beispielsweise so genanntes Channel Coding oder Kanalkodierung eingesetzt.

Für die Modulation des Maskierungssignals können beispielsweise eine so genannte Spread-Spektrum-Modulation bzw. Frequenzspreizung oder das so genannte Orthogonal Frequency-Division Multiplexing (OFDM) oder das orthogonale Frequenzmultiplexverfahren verwendet werden. Bei diesen Modulationsarten können z.B. sehr einfach hohe Datenraten für eine Übertragung von Informationsdaten ID zur Verfügung gestellt werden und gleichzeitig Störungen wie z.B. Signale von Funkkommunikationssystemen außerhalb der Personenbeförderungseinrichtung PB unterbunden werden.

In einem vierten Verfahrensschritt 4 werden dann die über das Maskierungssignal transportierten Informationsdaten ID durch die Antenneneinheit A zu den Ausgabeeinheiten AE1, ..., AEn weitergeleitet und können von diesen in einem fünften Verfahrensschritt 5 entsprechend ausgegeben und angezeigt werden. Die Ausgabeeinheiten AE1, ..., AEn werden dazu mit entsprechenden Empfangseinheiten ausgerüstet, durch welche die gesendeten Informationsdaten ID entsprechend ausgewertet werden können - d.h. beispielsweise durch entsprechend Dekodierung und Demodulation für eine Ausgabe aufbereitet werden.

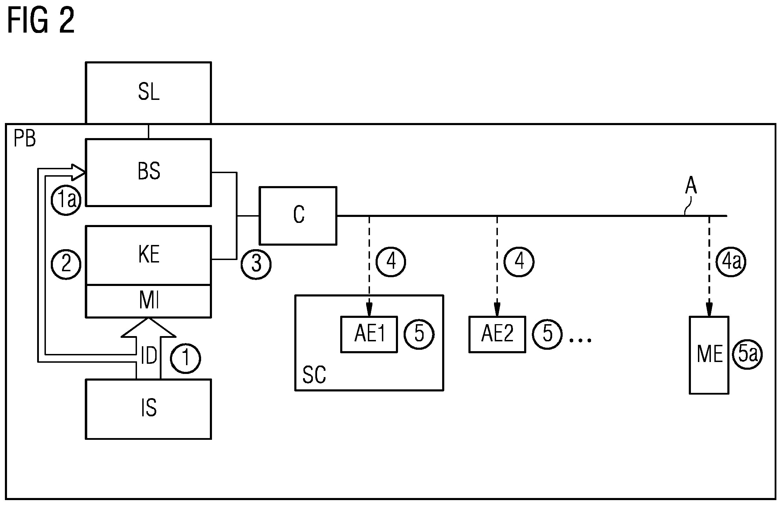

In Figur 2 ist beispielhaft und schematisch eine Variante des erfindungsgemäßen Verfahrens zur Übertragung von Informationsdaten ID in einer Personenbeförderungseinrichtung PB dargestellt. Bei dieser beispielhaften Variante können neben den Ausgabeeinheiten AE1, AE2, ... auch in der Personenbeförderungseinrichtung PB befindliche mobile Endgeräte ME, insbesondere Mobiltelefone auf Basis des so genannten Universal Mobile Telecommunication Systems (UMTS-) Standards, für eine Ausgabe und Anzeige der Informationsdaten ID genutzt werden. Da bei UMTS beispielsweise die so genannte Spread-Spektrum- bzw. Frequenzspreizungstechnologie als Modulationsverfahren eingesetzt wird, kann bei geeigneter Modulation des Maskierungssignals wie z.B. Spread-Spektrum-Modulation sehr einfach ein Teil des Spektrums des Maskierungssignals zur direkten Übertragung der Informationsdaten ID zu einem entsprechenden mobilen Endgeräte ME genutzt werden.

Figur 2 zeigt daher wieder die Personenbeförderungseinrichtung PB mit den Informationssystem IS und den zugehörigen Ausgabeeinheiten AE1, AE2, ... ,AEn. Die Personenbeförderungseinrichtung PB weist wiederum ein Funkkommunikationssystem BS, C, A auf, welches sich im Inneren der Personenbeförderungseinrichtung PB befindet. Auch eine Kontrolleinheit KE zum Erstellen des Maskierungssignals ist wieder vorgesehen.

Allerdings wird für eine Ausgabe der Informationsdaten ID auf in der Personenbeförderungseinrichtung PB befindlichen mobilen Endgeräten ME in einem zum ersten Verfahrensschritt 1 parallelen Verfahrensschritt 1a zumindest ein Teil der Informationsdaten ID direkt zur Basisstation BS des internen Funkkommunikationssystems BS, C, A geleitet, damit im weiteren Verfahrensschritten 2, 3 zumindest ein Teil des Spektrums des Maskierungssignals für einen Transport des Informationsdatenstroms ID direkt zu den mobilen Endgeräten ME, insbesondere UMTS-Endgeräten, über das interne Funkkommunikationssystem BS, C, A genutzt werden kann. Der Datenstrom wird wieder über die Antenneneinheit A verbreitet und gelangt in einem zum vierten Verfahrensschritt 4 parallelen Verfahrensschritt 4a zum mobilen Endgerät ME.

In einem dem fünften Verfahrensschritt 5 entsprechenden Verfahrensschritt 5a wird dann der Informationsdatenstrom ID auf dem mobilen Endgerät ME ausgegeben und angezeigt. Damit können auf einfache Weise vorhandene Ressourcen wie z.B. das in der Personenbeförderungseinrichtung befindliche Funkkommunikationssystem BS, C, A für die Übertragung der Informationsdaten ID genutzt werden. Gegebenenfalls könnte bei Nutzung der mobilen Endgeräte ME für eine Datenausgabe und - anzeige auf eigene Ausgabeeinheiten AE1, ..., AEn verzichtet werden.

## Patentansprüche

1. Verfahren zum Übertragen von Informationsdaten (ID) in einer Personenbeförderungseinrichtung (PB), welche ein Informationssystem mit (IS) zugehörigen Ausgabeeinheiten (AE1, ..., AEn) umfasst, und wobei eine Verbindungsaufnahme zwischen in der Personenbeförderungseinrichtung (PB) befindlichen mobilen Endgeräten (ME) und Funkkommunikationssystemen außerhalb der Personenförderungseinrichtung (PB) durch ein Maskierungssignal, welches von einer Kontrolleinheit (KE) erzeugt wird, unterbunden und die Verbindungsaufnahme von in der Personenbeförderungseinrichtung (PB) befindlichen mobilen Endgeräten (ME) zu einem in der Personenbeförderungseinrichtung (PB) befindlichen Funkkommunikationssystem (BS, C, A) umgelenkt wird, **dadurch gekennzeichnet, dass** dieses Maskierungssignal von der Kontrolleinheit derart kodiert und moduliert wird (2), dass Informationsdaten (ID) mit Hilfe des Maskierungssignals vom Informationssystem (IS) über eine Kombinationseinheit (C) und eine Antenneneinheit (A) des in der Personenbeförderungseinrichtung (PB) befindlichen Funkkommunikationssystems (BS, C, A) zu den zum Informationssystem (IS) zugehörigen Ausgabeeinheiten (AE1, ..., AEn) übertragen (3, 4) und von diesen Ausgabeeinheiten (AE1, ..., AEn) ausgegeben werden (5) .

2. Verfahren nach Anspruch 1, wobei die Informationsdaten (ID) über eine Schnittstelle (MI) vom Informationssystem (IS) an die Kontrolleinheit (KE) übertragen werden (1), dass von der Kontrolleinheit (KE) das Maskierungssignal generiert wird (2), und dass dann das Maskierungssignal für einen Transport der Informationsdaten (ID) zu den Ausgabeeinheiten (AE1, ..., AEn) genutzt wird.

3. Verfahren nach einem der Ansprüche 1 bis 2, wobei die Ausgabeeinheiten (AE1, ..., AEn) des Informationssystems (IS) zum Empfangen und Anzeigen der Informationsdaten (IS) mit entsprechenden Empfangseinheiten ausgerüstet werden, von welchen die Informationsdaten (IS) empfangen und ausgewertet werden.

4. Verfahren nach einem der Ansprüche 1 bis 3, wobei als Maskierungssignal ein breitbandiges Signal mit rauschähnlichem Charakter genutzt wird, von welchem durch entsprechende Kodierung und Modulation eine Funktion als Störsignal erfüllt und eine hohe Datenrate für den Transport der Informationsdaten (ID) zur Verfügung gestellt wird.

5. Verfahren nach einem der Ansprüche 1 bis 4, wobei für eine Kodierung und/oder Modulation des Maskierungssignals eine so genannte Spread-Spektrum-Modulation oder ein so genannte Orthogonal Frequency-Division Multiplexing verwendet wird (2) .

6. Verfahren nach einem der Ansprüche 1 bis 5, wobei als Ausgabeeinheiten (AE1, ..., AEn) des Informationssystems fest montierte und/oder bewegliche Ausgabegeräte (AE1, ..., AEn) verwendet werden.

7. Verfahren nach einem der Ansprüche 1 bis 6, wobei ein Teil eines Spektrums des Maskierungssignals zum Übertragen von Informationsdaten (ID) des Informationssystems (IS) an die in der Personenbeförderungseinrichtung (PB) befindlichen mobilen Endgeräte (ME) verwendet wird (1a, 4a).

## Claims

1. Method for transferring informational data (ID) in a passenger transportation device (PB), having an informational system with (IS) associated output units (AE1, ..., AEn), and wherein setup of a connection between mobile terminals (ME) located in the passenger transportation device (PB) and radio communication systems outside the passenger transportation device (PB) is suppressed by a masking signal generated by a control unit (KE) and the setup of a connection between mobile terminals (ME) located in the passenger transportation device (PB) is diverted to a radio communication system (BS, C, A) located in the passenger transportation device (PB), **characterised in that** this masking signal is coded and modulated (2) by the control unit (KE), such that informational data (ID) is transferred (3, 4) with the aid of the masking signal from the informational system (IS) via a combination unit (C) and an antenna unit (A) of the radio communication system (BS, C, A) disposed in the passenger transportation device (PB) to the output units (AE1, ..., AEn) belonging to the informational system (IS) and is then output (5) by these output units (AE1, ..., AEn) .

2. Method according to claim 1, wherein the informational data (ID) is transferred (1) via an interface (MI) from the informational system (IS) to the control unit (KE), that the masking signal is generated (2) by the control unit (KE) and that the masking signal is then used for transporting the informational data (ID) to the output units (AE1, ..., AEn).

3. Method according to one of claims 1 to 2, wherein the output units (AE1, ..., AEn) of the informational system (IS) are equipped with corresponding receive units for receiving and displaying the informational data (IS), by which the informational data (IS) is received and evaluated.

4. Method according to one of claims 1 to 3, wherein a broadband signal with a noise-like character is used as the masking signal, by which by means of corresponding coding and modulation a function is fulfilled as an interference signal and a high data rate is made available for the transportation of the informational data (ID).

5. Method according to one of claims 1 to 4, wherein what is known as Spread-Spectrum Modulation or what is known as Orthogonal Frequency Division Multiplexing is used (2) for coding and/or modulation of the masking signal.

6. Method according to one of claims 1 to 5, wherein fixed and/or mobile output devices (AE1, ..., AEn) are used as output units (AE1, ..., AEn) of the informational system.

7. Method according to one of claims 1 to 6, wherein a part of a spectrum of the masking signal is used (1a, 4a) for transferring informational data (ID) of the informational system (IS) to the mobile terminals (ME) located in the passenger transportation device (PB).

## Revendications

1. Procédé de transmission de données d'information (ID) dans un dispositif de transport de personnes (PB) qui comprend un système d'information (IS) avec des unités de sortie associées (AE1, ..., AEn), et un établissement de liaison entre des terminaux mobiles (ME) situés dans le dispositif de transport de personnes (PB) et des systèmes de radiocommunication en dehors du dispositif de transport de personnes (PB) étant empêché par un signal de masquage généré par une unité de contrôle (KE) et l'établissement de liaison étant détourné des terminaux mobiles (ME) situés dans le dispositif de transport de personnes (PB) vers un système de radiocommunication (BS, C, A) situé dans le dispositif de transport de personnes (PB), **caractérisé en ce que** ce signal de masquage est codé et modulé (2) de manière telle par l'unité de contrôle que des données d'information (ID) sont transmises (3, 4), à l'aide du signal de masquage, via une unité de combinaison (C) et une unité d'antenne (A) du système de radiocommunication (BS, C, A) situé dans le dispositif de transport de personnes (PB), du système d'information (IS) vers les unités de sortie (AE1, ..., AEn) associées au système d'information (IS) et sont produites (5) en sortie par ces unités de sortie (AE1, ..., AEn).

2. Procédé selon la revendication 1, les données d'information (ID) étant transmises (1) via une interface (MI) du système d'information (IS) à l'unité de contrôle (KE), le signal de masquage étant généré (2) par l'unité de contrôle (KE) et le signal de masquage étant alors utilisé pour un transport des données d'information (ID) vers les unités de sortie (AE1, ..., AEn).

3. Procédé selon l'une des revendications 1 à 2, les unités de sortie (AE1, ..., AEn) du système d'information (IS) étant, pour recevoir et afficher les données d'information (IS), équipées d'unités réceptrices appropriées qui reçoivent et évaluent les données d'information (IS).

4. Procédé selon l'une des revendications 1 à 3, en tant que signal de masquage étant utilisé un signal large bande à caractère pseudo-bruit qui, par un codage et une modulation appropriés, remplit une fonction en tant que signal parasite et met à disposition un débit de données élevé pour le transport des données d'information (ID).

5. Procédé selon l'une des revendications 1 à 4, pour un codage et/ou une modulation du signal de masquage étant utilisés (2) ce qu'il est convenu d'appeler une modulation à spectre étalé ou un multiplexage par répartition en fréquences orthogonales.

6. Procédé selon l'une des revendications 1 à 5, en tant qu'unités de sortie (AE1, ..., AEn) du système d'information étant utilisés des appareils de sortie (AE1, ..., AEn) mobiles et/ou montés à demeure.

7. Procédé selon l'une des revendications 1 à 6, une partie d'un spectre du signal de masquage étant utilisée (1a, 4a) pour la transmission de données d'information (ID) du système d'informations (IS) aux terminaux mobiles (ME) situés dans le dispositif de transport de personnes (PB).
